# EUROPÄISCHE PATENTANMELDUNG

(11) **EP 1 530 010 A2**
(43) Veröffentlichungstag der Anmeldung: **11.05.2005**
(21) Anmeldenummer: 04105161.6
(22) Anmeldetag: 19.10.2004
(51) Int. Cl.: F24H 8/00, F24H 1/40

(54) **Wärmeübertrager**

(30) Priorität: 04.11.2003 DE 10351438
(71) Anmelder: ROBERT BOSCH GMBH, 70442 Stuttgart (DE)
(72) Erfinder: Magenau, Horst, 70839, Gerlingen (DE); Laqua, Ekkehard, 75446, Wiernsheim (DE); Waidner, Juergen, 73274, Notzingen (DE); Leuthner, Stephan, 70372, Stuttgart (DE); Volz, Wolfgang, 70197, Stuttgart (DE); Clement, Uwe, 73114, Schlat (DE); Ostertag, Anke, 73207, Plochingen (DE); Pla Perujo, Maria, 70374, Stuttgart (DE)

(57) **Zusammenfassung**

Die Erfindung bezieht sich auf einen Wärmeübertrager (1) für einen Brenner (5) mit einer Brennkammer (7) und mit einer ein Kühlmittel führenden Übertragungseinheit (5,6), die von einem Abgas umströmt wird.

Hierbei ist erfindungsgemäß vorgesehen, dass eine erste Übertragungseinheit (5) aus Metall in einem ersten Strömungsbereich (2) des Abgases angeordnet ist, der der Brennkammer (7) zugewandt ist, und dass eine zweite aus Kunststoff bestehende Übertragungseinheit (6) in einem zweiten Strömungsbereich (3) des Abgases angeordnet ist, der sich an den ersten Strömungsbereich (2) anschließt und von der Brennkammer (7) abgewandt ist.

## Beschreibung

Die Erfindung betrifft einen Wärmeübertrager für einen Brenner mit einer Brennkammer und mit einer ein Kühlmittel führenden Übertragungseinheit, die von einem Abgas umströmt wird.

Aus EP 0 994 321 A2 ist ein Wärmeübertrager bekannt, der mehrere parallel zueinander verlaufende Rohre mit einem runden Querschnitt aufweist, die ein zu erhitzendes Wasser führen. Auf den Rohren sitzt ein Paket von Lamellen, die zwischen sich Spalte zum Durchtritt eines Verbrennungsgases bilden. Hierbei treten die Verbrennungsgase in Wechselwirkung mit dem in den Rohren aufzuheizenden Wasser, bevor sie als Abgase abgekühlt den Wärmeübertrager über eine Abgasabführung verlassen. Während das Abgas, das im Wesentlichen aus CO₂ und N₂, Wasserdampf und geringen Säurebestandteilen (Schwefelsäure und Salpetersäure) besteht, durch den Wärmeübertrager strömt, kühlt sich das Abgas ab, wodurch der Wasserdampf und die Säurebestandteile auskondensieren. Bei hohen Abgastemperaturen kondensiert jedoch zunächst ein Gemisch aus, das hauptsächlich aus Säurebestandteilen besteht und einen niedrigen pH-Wert aufweist. Von besonderem Nachteil ist, dass dieses entstehende Kondensat stark konzentriert an Schwefelsäure ist, wobei es auf metallische Oberflächen korrosiv wirkt. Dies kann soweit führen, dass der Wärmeübertrager auf der Abgasseite zusetzt oder ausfällt.

Ein weiterer Nachteil derartiger Wärmeübertrager ist, dass das Abgas zum einen nicht homogen über die Wärmeaustauschflächen strömt und zum anderen das Abgas an den Wandzonen stärker abgekühlt wird, als in der Mitte des Wärmeübertragers.

Folglich bilden sich in Strömungsrichtung gesehen unterschiedliche Temperaturen innerhalb des Wärmeübertragers bei einem gleichen Abstand zum Brenner aus, wodurch es bereits im oberen Bereich des Wärmeübertragers zum Auskondensieren von relativ konzentrierter Schwefelsäure kommen kann. Unterhalb dieses Bereiches, insbesondere an weit von den Rohrwänden entfernten Stellen (z.B. auf den Lamellen), können die Temperaturen des Abgases deutlich oberhalb der Kondensationstemperatur liegen, so dass beim Heruntertropfen des Kondensats auf heißere Flächen des Wärmeübertragers eine Rückverdampfung auftreten kann, mit der Folge, dass noch stärker konzentrierte Säure entsteht.

Es ist Aufgabe der vorliegenden Erfindung, einen Wärmeübertrager bereitzustellen, bei dem der Korrosionsangriff wesentlich gesenkt werden kann. Darüber hinaus soll der Wärmeübertrager einfach und wirtschaftlich herstellbar sein.

Die Aufgabe wird durch einen Wärmeübertrager mit den Merkmalen des Anspruches 1 gelöst. In den abhängigen Ansprüchen 2 bis 9 sind bevorzugte Weiterbildungen des erfindungsgemäßen Wärmeübertragers angegeben.

Es ist erfindungsgemäß vorgesehen, dass eine erste Übertragungseinheit aus Metall in einem ersten Strömungsbereich des Abgases angeordnet ist, der der Brennkammer zugewandt ist, und dass eine zweite aus Kunststoff bestehende Übertragungseinheit in einem zweiten Strömungsbereich des Abgases angeordnet ist, der sich an den ersten Strömungsbereich anschließt und von der Brennkammer abgewandt ist. Während des Betriebes des Wärmeübertragers, der sich bei der vorliegenden Erfindung auf den kondensierenden Betrieb bezieht, wird in der Brennkammer eine Verbrennung mit einer Flammtemperatur von beispielsweise ungefähr 1200°C erzeugt. Die hierbei entstehenden Verbrennungsgase werden durch den Wärmeübertrager geleitet, wobei die heißen Verbrennungsgase zunächst durch den ersten und anschließend durch den zweiten Strömungsbereich strömen. Die Übertragungseinheiten können unterschiedlich ausgebildete Umströmungsflächen aufweisen, entlang dieser Flächen das Abgas strömen kann. Innerhalb der Übertragungseinheiten strömt gleichzeitig das Kühlmittel, das beispielsweise zu erhitzendes Wasser sein kann. Während des Betriebes des Wärmeübertragers dient die Umströmungsfläche der Übertragungseinheit als Wärmeaustauschfläche, wobei die Abgase sich in Strömungsrichtung, das heißt ausgehend vom ersten Strömungsbereich bis zum zweiten Strömungsbereich, abkühlen und zugleich das in der Übertragungseinheit strömende Wasser erwärmen.

Besonders vorteilhaft ist, dass die erste Übertragungseinheit in dem ersten Strömungsbereich des Abgases so angeordnet ist, dass das Abgas im Wesentlichen nicht unter die Kondensationstemperatur, die unter anderem vom Abgasgemisch sowie vom Druck abhängt, abkühlbar ist. Bei dem vorliegenden Wärmeübertrager kann die Kondensationstemperatur circa 150°C bis 200°C betragen. Das heiße Abgas strömt hierbei in den ersten Strömungsbereich des Wärmeübertragers, wobei es zu einem Wärmestrom in Richtung des Temperaturgefälles kommt. Das Abgas wird somit durch das in der ersten Übertragungseinheit strömende Wasser abgekühlt. Von Vorteil ist, dass sich das Abgas nicht unter die Kondensationstemperatur abkühlt, wodurch kein Kondensat in dem ersten Strömungsbereich anfällt. Folglich kommt es nicht, im Gegensatz zu den im Stand der Technik bekannten Wärmeübertragern, zu einer Korrosion innerhalb des Wärmeübertragers beziehungsweise zu einem Zusetzen oder einem Ausfall des Wärmeübertragers auf der Abgasseite. Die Temperatur des Abgases kühlt erfindungsgemäß homogen ab, das bedeutet, dass alle Stellen mit dem gleichen Abstand zur Brennkammer im Wesentlichen die gleiche Temperatur aufweisen. Nach einem gewissen Strömungsweg gelangt das Abgas anschließend in den zweiten Strömungsbereich, in dem es weiter durch die dort angeordnete zweite Übertragungseinheit abgekühlt wird, die ebenfalls mit Wasser durchströmt werden kann. Während des Abkühlvorgangs unterschreitet das Abgas die Kondensationstemperatur, so dass Kondensat insbesondere an der Umströmungsfläche der zweiten Übertragungseinheit anfällt. Die zuerst kondensierende Flüssigkeit ist in der Regel besonders stark an Säurebestandteilen konzentriert, wobei mit einer weiteren Abnahme der Abgastemperatur gleichzeitig die Säurekonzentration des anfallenden Kondensates sinkt. Da die zweite Übertragungseinheit erfindungsgemäß aus Kunststoff besteht, kann durch das aggressive Kondensat kein Korrosionsangriff erfolgen. Die positive Folge ist, dass durch eine derartige Ausgestaltung der Erfindung die Lebensdauer eines Wärmeübertragers erheblich erhöht werden kann.

Gemäß einer weiteren Ausbildung weist die erste und die zweite Übertragungseinheit mindestens ein Rohr mit einer Mantelfläche auf, an der Wärmeübertragungsflächen angeordnet sind. Der Wärmeübertrager kann derart konstruiert sein, dass die Strömungsrichtung des Abgases quer zu den Rohren verläuft. Es ist jedoch ebenfalls denkbar, dass das Abgas längs zu den Rohren strömt. Ferner ist die vorliegende Erfindung auf diverse Wärmeübertrager zu beziehen, die beispielsweise im Gleichstrom, Kreuzstrom oder Gegenstrom arbeiten. Durch die Ausgestaltung des Rohres mit Wärmeübertragungsflächen wird die Kontaktfläche zwischen dem Abgas und dem Rohr erhöht, so dass der Wirkungsgrad des Wärmeübertragers wesentlich verbessert werden kann.

Gemäß einer vorteilhaften Ausgestaltung der Erfindung können die Wärmeübertragungsflächen Lamellen sein. Durch den Einsatz von Lamellen können im Vergleich zu glatten Rohren größere Wärmeübertragungsflächen realisiert werden, wodurch eine kompakte, leistungsfähige Wärmeübertragerkonstruktion erzielbar ist.

Vorzugsweise besteht die erste Übertragungseinheit aus Stahl, Edelstahl, Kupfer oder Aluminium oder deren Legierungen. Die Werkstoffe können auf verschiedene Weise miteinander kombiniert werden.

Des Weiteren ist es vorteilhaft, wenn der erste und der zweite Strömungsbereich einen Wandbereich aufweisen, an dem eine Wärmedämmung angeordnet ist. Gerade an den Randbereichen beziehungsweise an den Wandzonen kann das Abgas schneller aufgrund kälterer Umgebungstemperaturen abkühlen, so dass eine homogene Temperaturverteilung des Abgases bezüglich einer Rohrreihe ohne Dämmung kaum erreichbar wäre. Ohne Wärmedämmung kann es an den Randbereichen bereits zur Kondensation kommen, wohingegen im mittleren Bereich die Temperatur des Abgases oberhalb der Kondensationstemperatur liegt. Somit kann die Wärmedämmung insbesondere im ersten Strömungsbereich einer Kondensation des Abgases wirksam entgegenwirken. Ferner werden durch die Wärmedämmung erhebliche Beträge an Energieverlusten verhindert.

Nachstehend wird die Erfindung anhand der beigefügten Zeichnungen näher erläutert. Es zeigen
- Fig. 1: eine schematische Schnittansicht eines Wärmeübertragers,
- Fig. 2: eine Schnittansicht einer Übertragungseinheit, welche Rohre mit Lamellen umfasst, und
- Fig. 3: die in Fig. 2 dargestellte Übertragungseinheit gemäß der Schnittführung III-III,

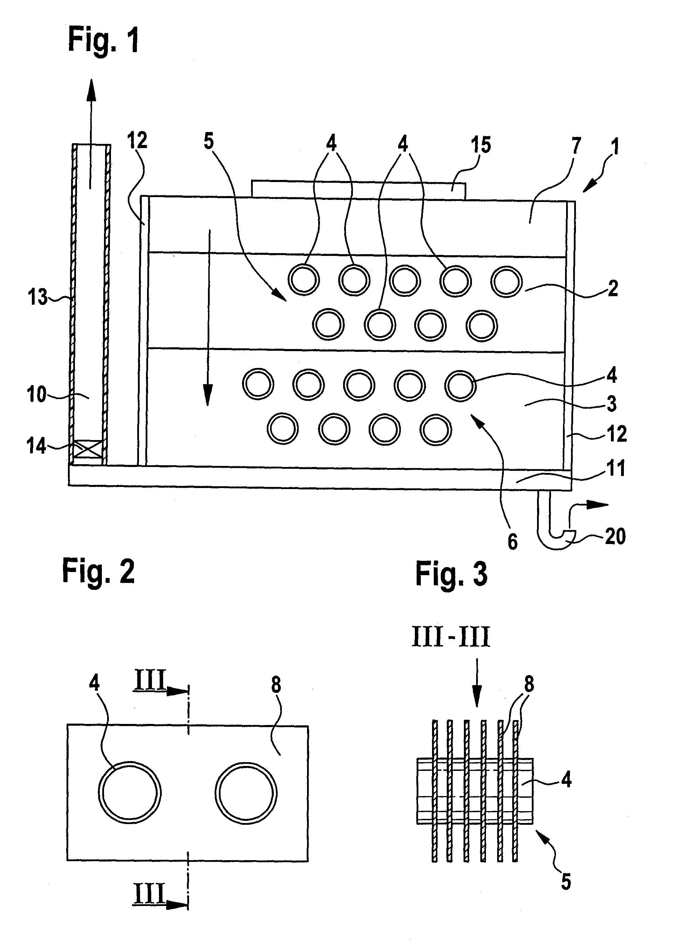

Der in Fig. 1 dargestellte Wärmeübertrager 1 umfasst einen Brenner 15, eine Brennkammer 7 sowie eine erste Übertragungseinheit 5, in der Wasser als Kühlmittel geführt ist. Die Übertragungseinheit 5, die von einem Abgas umströmt wird, weist mit einer Mantelfläche ausgebildete Rohre 4 auf, die in einem ersten Strömungsbereich 2 angeordnet sind. Der erste Strömungsbereich 2 ist hierbei der Brennkammer 7 zugewandt. Der zweite Strömungsbereich 3 liegt unterhalb des ersten Bereiches 2 und ist somit von der Brennkammer 7 abgewandt. Der Wärmeübertrager 1 weist einen Wandbereich auf, der mit einer Wärmedämmung 12 ausgebildet ist. Unterhalb des zweiten Strömungsbereiches 3 ist eine Wanne 11 angeordnet, in der im Wärmeübertrager 1 anfallendes Kondensat aufgefangen wird. An der Wanne 11 ist ein Siphon 20 angeordnet, durch den das Kondensat abgeführt wird. Ein Kamin 10 mit einem Gebläse 14 dient dazu, das Abgas in die Umgebung zu transportieren. Die im ersten Strömungsbereich 2 angeordneten Rohre 4 bestehen erfindungsgemäß aus Metall, wohingegen die im zweiten Strömungsbereich 3 verlaufenden Rohre 4 aus Kunststoff bestehen.

Während des Betriebes des Wärmeübertragers 1 erzeugt der Brenner 15 in der Brennkammer 7 einen heißen Abgasstrom, der zunächst in den ersten Strömungsbereich 2 geleitet wird. Dort umströmt das Abgas die Rohre 4, wobei eine Wärmeübertragung an der Mantelfläche der Rohre 4 stattfindet. Das in den Rohren 4 strömende Wasser erwärmt sich hierbei, während in Strömungsrichtung (angedeutet durch Pfeildarstellung in Fig. 1) die Abgastemperatur stetig abnimmt. Die Übertragungseinheit 5 des ersten Strömungsbereiches 2 ist erfindungsgemäß derart angeordnet, dass das Abgas im Wesentlichen nicht unter die Kondensationstemperatur abkühlbar ist. Im vorliegenden Beispiel kühlt sich das heiße Abgas von einer Temperatur von ungefähr 1200°C bis auf circa 200°C im ersten Strömungsbereich 2 ab, so dass es nicht zu einer Kondensatbildung kommt. Anschließend strömt das Abgas in den zweiten Strömungsbereich 3 des Wärmeübertragers 1, wobei es durch die dort aus Kunststoff angeordneten Rohre 4, die ebenfalls mit Wasser durchströmt werden, unterhalb der Kondensationstemperatur abgekühlt wird. Insbesondere an den Oberflächen der Kunststoffrohre 4 fällt Kondensat an, der nach unten in die Wanne 11 tropft. Da die zweite Übertragungseinheit 6 des zweiten Strömungsbereiches 3 aus Kunststoff besteht, kann das säurehaltige Kondensat die Rohre 4 nicht angreifen, das heißt es entsteht keine Korrosion. Das abgekühlte Abgas verlässt den zweiten Strömungsbereich 3, wobei es durch den Kamin 10 in die Umgebung strömt. Im vorliegenden Ausführungsbeispiel weist der Kamin 10 ein Kunststoffrohr 13 auf, das den Kamin 10 vor Schädigung durch eventuell anfallendes Kondensat schützt, so dass kostenaufwendige Kaminsanierungen vermieden werden können.

Im dargestellten Ausführungsbeispiel besteht die zweite Übertragungseinheit 6 aus einem hitzebeständigen Kunststoff, der beispielsweise bis 200° hitzebeständig ist.

Es besteht ebenfalls die Möglichkeit einen Teil des Abgases dazu zu benutzen, die für den Brenner 15 anzusaugende Frischluft vorzuwärmen, wodurch der Wirkungsgrad eines derartigen Wärmeübertragers 1 verbessert werden kann. Es ist hierbei denkbar, beispielsweise einen Teil des Abgases im ersten Strömungsbereich 2 und/oder im zweiten Bereich 3 abzuziehen, was in den Figuren jedoch nicht explizit dargestellt ist.

In den Fig. 2 und 3 ist ein Ausschnitt einer Ausführungsform der ersten Übertragungseinheit 5 dargestellt, welche Rohre 4 umfasst, auf denen Wärmeübertragungsflächen in Form von Lamellen 8 angeordnet sind, die sich über mehrere Rohre 4 erstrecken. Die Lamellen 8 bestehen aus ausgestanzten Blechscheiben, die mit Bohrungen ausgebildet sind. In diese Bohrungen sind die einen kreisförmigen Querschnitt aufweisenden Rohre 4 eingeführt, wobei die Lamellen 8 im Presssitz auf den Rohren 4 angeordnet sind. Das Abgas strömt bei dieser Anordnung entlang der Lamellen 8 sowie der Mantelfläche der Rohre 4 und gibt gleichzeitig Wärme an diese umströmte Übertragungseinheit 5 ab. Das innerhalb der Rohre 4 strömende Wasser erwärmt sich hierbei.

Des Weiteren kann eine Distanzierung der einzelnen Lamellen 8 durch Distanzringe erreicht werden, die auf das Rohr 4 aufgeschoben werden, was jedoch exemplarisch nicht in den Figuren dargestellt ist.

Die in den Figuren 2 und 3 gezeigten Lamellen 8 sitzen im Presssitz auf dem Rohr 4, wodurch eine zuverlässige mechanische und wärmeleitende Verbindung erreicht wird. Dieser Presssitz kann beispielsweise durch ein Keilprofil bewirkt werden.

Eine weitere Alternative für eine zuverlässige Verbindung zwischen der Lamelle 8 und dem Rohr 4 ist, einen wärmeleitenden Überzug aufzubringen, beispielsweise eine Verzinkung, nachdem die Lamelle 8 auf das Rohr 4 geschoben wurde. Eine Fixierung der Lamelle 8 auf das Rohr 4 durch Verlöten ist ebenfalls denkbar.

Die Abgasströmungsrichtung bei der mit Lamellen 8 beziehungsweise mit Rippen 9 ausgebildeten Übertragungseinheit 5 ist durch den jeweils dargestellten Pfeil in der Fig. 3 angedeutet. Es handelt sich in diesen Fällen jeweils um quer angeströmte Rohre 4.

In den dargestellten Ausführungsbeispielen haben die Rohre 4 eine kreisförmige Querschnittsfläche. Es ist ebenfalls möglich, dass das Rohr 4 eine elliptische Querschnittsfläche aufweist oder das Rohr 4 als Flachrohr ausgestaltet ist (nicht in den Figuren dargestellt). Es hat sich gezeigt, dass die beiden letztgenannten ein günstiges Strömungsverhalten aufweisen, insbesondere bei höheren Strömungsgeschwindigkeiten des Abgases.

## Patentansprüche

1. Wärmeübertrager (1) für einen Brenner (15) mit einer Brennkammer (7) und mit einer ein Kühlmittel führenden Übertragungseinheit(5,6), die von einem Abgas umströmt wird,
**dadurch gekennzeichnet,**
**dass** eine erste Übertragungseinheit (5) aus Metall in einem ersten Strömungsbereich (2) des Abgases angeordnet ist, der der Brennkammer (7) zugewandt ist, und dass eine zweite aus Kunststoff bestehende Übertragungseinheit (6) in einem zweiten Strömungsbereich (3) des Abgases angeordnet ist, der sich an den ersten Strömungsbereich (2) anschließt und von der Brennkammer (7) abgewandt ist.

2. Wärmeübertrager (1) nach Anspruch 1,
**dadurch gekennzeichnet,**
**dass** die erste Übertragungseinheit (5) in dem ersten Strömungsbereich (2) des Abgases so angeordnet ist, dass das Abgas im Wesentlichen nicht unter die Kondensationstemperatur abkühlbar ist und dass die zweite Übertragungseinheit (6) in den Stömungsbereich des Abgases so angeordnet ist, dass das Abgas in der zweiten Übertragungseinheit (6) im Wesentlichen unter die Kondensationstemperatur abkühlbar ist, wobei sich ein Kondensat in der zweiten Übertragungseinheit (6) bildet.

3. Wärmeübertrager (1) nach Anspruch 1 oder 2,
**dadurch gekennzeichnet,**
**dass** die erste und die zweite Übertragungseinheit (5,6) mindestens ein Rohr (4) mit einer Mantelfläche aufweist, an der Wärmeübertragungsflächen (8) angeordnet sind.

4. Wärmeübertrager (1) nach Anspruch 3,
**dadurch gekennzeichnet,**
**dass** die Wärmeübertragungsflächen Lamellen (8) und/oder Rippen sind.

5. Wärmeübertrager (1) nach einem der vorhergehenden Ansprüche,
**dadurch gekennzeichnet,**
**dass** die erste Übertragungseinheit (5) aus Stahl, Edelstahl, Kupfer oder Aluminium oder deren Legierungen bestehen.

6. Wärmeübertrager (1) nach einem der vorhergehenden Ansprüche,
**dadurch gekennzeichnet,**
**dass** mehrere Rohre (4) quer zur Strömungsrichtung des Abgases fluchtend zueinander angeordnet sind.

7. Wärmeübertrager (1) nach einem der vorhergehenden Ansprüche,
**dadurch gekennzeichnet,**
**dass** mehrere Rohre (4) quer zur Strömungsrichtung des Abgases versetzt zueinander angeordnet sind.

8. Wärmeübertrager (1) nach einem der vorhergehenden Ansprüche,
**dadurch gekennzeichnet,**
**dass** der erste und der zweite Strömungsbereich (2,3) einen Wandbereich aufweisen, an dem eine Wärmedämmung (12) angeordnet ist.

9. Wärmeübertrager (1) nach einem der vorhergehenden Ansprüche,
**dadurch gekennzeichnet,**
**dass** die zweite Übertragungseinheit (6) aus einem hitzebeständigen Kunststoff besteht.
